Europäisches Patentamt

European Patent Office

Office européen des brevets

(19)

(11)     **EP 0 890 157 B1**

(12)          **FASCICULE DE BREVET EUROPEEN**

| | |
|---|---|
| (45) Date de publication et mention<br>de la délivrance du brevet:<br>**21.01.2004   Bulletin 2004/04** | (51) Int Cl.⁷: **G07F 7/10**, H04L 9/06 |
| (21) Numéro de dépôt: **96933479.6** | (86) Numéro de dépôt international:<br>**PCT/FR1996/001541** |
| (22) Date de dépôt: **01.10.1996** | (87) Numéro de publication internationale:<br>**WO 1997/014120 (17.04.1997 Gazette 1997/17)** |

(54) **PERFECTIONNEMENTS AUX CARTES A MEMOIRE**

VERBESSERUNGEN AN CHIPKARTEN

IMPROVEMENTS TO SMART CARDS

| | |
|---|---|
| (84) Etats contractants désignés:<br>**CH DE FR GB IE IT LI NL** | (72) Inventeur: **KOWALSKI, Jacek**<br>**F-13530 Trets (FR)** |
| (30) Priorité:  **09.10.1995  FR 9512176** | (74) Mandataire: **Marchand, André et al**<br>**OMNIPAT,**<br>**24 Place des Martyrs de la Résistance**<br>**13100 Aix-en-Provence (FR)** |
| (43) Date de publication de la demande:<br>**13.01.1999   Bulletin 1999/02** | |
| (73) Titulaire: **Inside Technologies**<br>**69930 Saint-Clément-les-Places (FR)** | (56) Documents cités:<br>**EP-A- 0 409 701**    **FR-A- 2 164 939**<br>**FR-A- 2 471 003**    **FR-A- 2 698 195** |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé et un circuit pour produire un code d'authentification permettant de sécuriser l'accès à un microcircuit.

La présente invention concerne notamment le domaine des cartes à mémoire, et plus particulièrement les microcircuits à logique câblée dont sont équipées les cartes à mémoire.

Sous l'appellation générique de "carte à puce", on désigne en fait deux grandes catégories de cartes qui se distinguent au plan de la technologie : d'une part, les cartes à microprocesseur, d'autre part, les cartes dites "à mémoire". A la différence des cartes à microprocesseur, les cartes à mémoire ne disposent que d'un microcircuit à logique câblée qui offre des possibilités beaucoup plus réduites qu'un microcircuit à microprocesseur, en termes de souplesse d'emploi, de capacité de traitement des données, de programmation, et particulièrement en termes de sécurité et de protection contre la fraude.

En contrepartie, les microcircuits à logique câblée présentent l'avantage d'être d'une structure plus simple et d'un coût de revient très bas, de sorte que les cartes à mémoire ont connu ces dernières années un important développement dans le cadre d'applications ne nécessitant pas un haut niveau de sécurité. Ainsi, on a vu se généraliser l'emploi des cartes à prépaiement du type carte téléphonique. A l'heure actuelle, de nouvelles applications comme le porte-monnaie électronique ou la clef électronique (notamment dans le domaine automobile) sont envisagées à grande échelle.

Il est toutefois nécessaire, pour que ces nombreuses perspectives d'applications puissent se concrétiser, que les microcircuits à logique câblée offrent à l'avenir un niveau de sécurité beaucoup plus élevé qu'aujourd'hui, et qu'ils puissent, sur le plan de la sécurité d'emploi, rivaliser avec les microcircuits à microprocesseur qui disposent de mécanismes de sécurité performants implantés sous forme de logiciel.

Ainsi, un objectif général de la présente invention est d'améliorer les mécanismes de protection des microcircuits à logique câblée sans perdre de vue le fait que les coûts de fabrication augmentent très rapidement lorsque l'on cherche à réaliser des fonctions de sécurité sophistiquées.

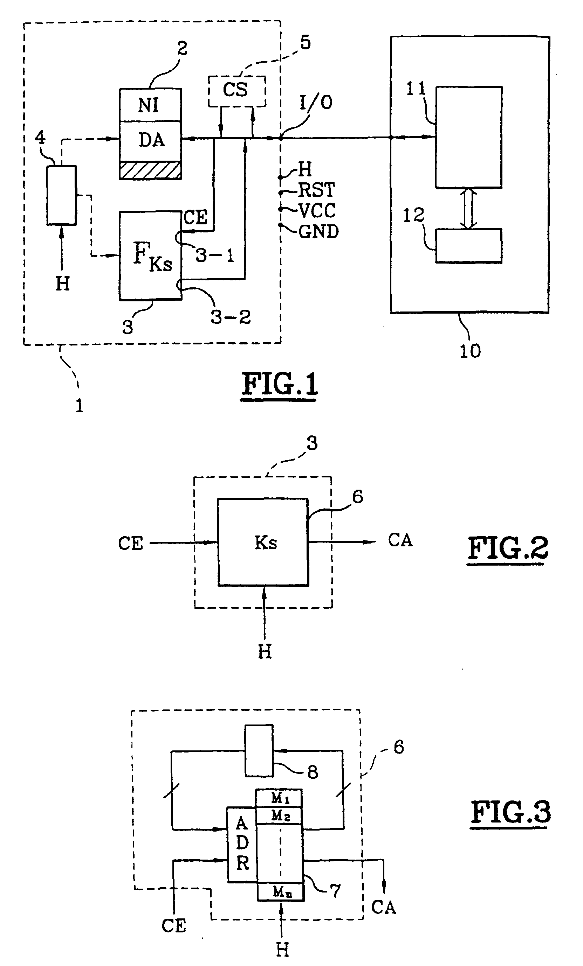

A titre de rappel, la figure 1 représente la structure et le fonctionnement d'un microcircuit 1 d'une carte à mémoire classique. Le microcircuit 1 à logique câblée comprend essentiellement une mémoire 2 de type série (c'est-à-dire accessible bit par bit), un circuit d'authentification 3 et un séquenceur logique 4 qui gère le fonctionnement des divers éléments à partir d'un signal d'horloge H fourni par un terminal 10 dans lequel la carte est insérée. La mémoire 2 contient, stockés sous forme binaire, un numéro de série de la carte NI (ou numéro d'identification du microcircuit) et des données DA de transaction, par exemple des données représentant la valeur monétaire de la carte ou un nombre d'impulsions téléphoniques. Le circuit d'authentification 3 présente une entrée série 3-1 destinée à recevoir un code d'entrée CE et une sortie série 3-2 pour délivrer un code d'authentification CA. Le microcircuit 1 est en outre équipé de plots de contact assurant l'interface électrique avec le terminal 10, parmi lesquels on distingue un plot d'entrée-sortie ' I/O pour la communication de données numériques, un plot RST d'initialisation du microcircuit, un plot H d'entrée du signal d'horloge, et deux plots d'alimentation électrique Vcc et GND. La sortie de la mémoire 2, ainsi que l'entrée 3-1 et la sortie 3-2 du circuit d'authentification, sont reliées au plot d'entrée-sortie I/O. Les données numériques circulent sous forme série, c'est-à-dire bit par bit en synchronisation avec le signal d'horloge, ce qui permet de simplifier la structure interne du circuit en ramenant à un seul fil les liaisons entre les divers éléments.

Lorsque la carte est insérée dans le terminal 10, il est indispensable, pour des raisons de sécurité, que le terminal 10 puisse déterminer si la carte est authentique ou frauduleuse. Le circuit d'authentification 3 va donc intervenir dans une procédure de vérification de l'authenticité de la carte qui se déroule comme décrit ci-après. On rappelle préalablement que le terminal 10, qui est généralement équipé d'un microprocesseur 11 commandé par une mémoire programme 12, connaît les secrets des mécanismes de sécurité implantés dans la carte.

Etape 1 - Le terminal 10 génère un code binaire aléatoire ALEXT qu'il applique au circuit d'authentification 3 en tant que code d'entrée CE. Le circuit 3 transforme le code ALEXT en un code d'authentification CA pouvant s'écrire

$$CA = F_{Ks} (ALEXT)$$

$F_{Ks}$ représentant la fonction de transformation, ou fonction d'authentification, réalisée par le circuit 3 à partir d'une clef secrète Ks dont il dispose.

Etape 2 - Parallèlement à l'étape 1, le terminal 10, qui connaît la clef secrète Ks et la fonction d'authentification $F_{ks}$ (enregistrée sous forme de logiciel dans la mémoire programme 12) calcule, de son côté, un code CA' tel que

$$CA' = F_{Ks} (ALEXT)$$

Etape 3 - Le terminal 10 compare le code CA produit par la carte et le code CA' qu'il a lui-même calculé. Si les deux codes sont différents, la carte n'est pas authentique et doit être refusée par le terminal.

Dans une variante connue du procédé qui vient d'être décrit, le terminal 10 ne connaît pas la clef secrète Ks, mais la détermine à partir du numéro de série NI et au moyen d'une autre clef secrète Kp dont il dispose et d'une fonction de transformation $F_{Kp}$ du type

$$Ks = F_{Kp} (NI)$$

Dans ce cas, l'étape 1 est précédée d'une étape préliminaire où le terminal 10 lit le numéro de série NI dans la mémoire 2 et en déduit Ks.

En définitive, on voit que le mécanisme de protection contre la fraude repose entièrement sur la fonction d'authentification $F_{KS}$ réalisée par le circuit 3, et ne doit pas pouvoir être décodée par un fraudeur.

Ainsi, un circuit d'authentification, pour être performant, doit présenter les caractéristiques ou avantages suivants :

- une entrée série et une sortie série,
- la possibilité de produire un code d'authentification long, c'est-à-dire d'au moins 16 bits, après avoir introduit le code d'entrée CE,
- une très haute sécurité, c'est-à-dire la quasi impossibilité pour un fraudeur de déceler le fonctionnement interne du circuit d'authentification,
- la production d'un bit du code d'authentification à chaque coup d'horloge,
- la production de deux codes d'authentification CA très différents à partir de deux codes d'entrée CE très ressemblants, par exemple ne se différenciant que par un bit (une même suite de "1" et de "0" ne comportant qu'un bit n'ayant pas la même valeur).

Pour l'homme de l'art, et comme illustré en figure 2, un circuit d'authentification 3 vu de l'extérieur est une machine logique 6 cadencée par un signal d'horloge H, dans laquelle on injecte, en synchronisation avec le signal d'horloge H, une série de bits formant le code d'entrée CE, et de laquelle on extrait, toujours en synchronisation avec l'horloge, une série de bits formant le code d'authentification CA. Par "machine logique" on entend dans la présente demande de brevet un circuit logique caractérisé à un instant donné par un certain état logique interne, puis à un instant suivant par un autre état (logique) interne, ainsi de suite, capable de fonctionner de façon autonome, c'est-à-dire de passer d'un état interne à un autre état interne sur réception d'un signal d'horloge même quand aucun code d'entrée CE ne lui est appliqué. Le mode de fonctionnement de la machine logique 6 doit être secret et est généralement basé sur une clef secrète Ks. L'introduction des bits du code d'entrée CE modifie les transitions d'états internes de la machine logique, et le code d'authentification CA extrait en série de la machine logique est représentatif des transitions d'états internes de la machine.

Si l'on souhaite produire un code série CA d'une certaine longueur, par exemple un code de 16 bits, après que le code d'entrée CE a été introduit, il est nécessaire de disposer d'une machine logique présentant un grand nombre d'états internes et une grande diversité dans les enchaînements de ses états internes. Par exemple, pour produire un code d'authentification CA de 16 bits en série après que le code d'entrée CE a été introduit, il faut disposer d'une machine logique pouvant effectuer d'elle-même. environ 65500 transitions différentes entre ses états internes afin d'exploiter toutes les possibilités offertes par les 16 bits du code d'authentification (un code de 16 bits pouvant prendre environ 65500 valeurs).

Dans l'art antérieur, et en particulier dans les brevets français FR 92 13913 (N° publication FR 2 698 195) et FR 89 09734 (N° publication FR 2 650 097 ou son équivalent EP 409 701), on a proposé des circuits d'authentification réalisés à partir d'une machine logique 6 du type représenté en figure 3. La machine logique 6 comprend une mémoire secrète 7 dont la sortie de type parallèle est ramenée sur l'entrée d'adresse ADR par l'intermédiaire d'un registre tampon 8. La mémoire secrète 7 contient une pluralité de mots binaires M1, M2, .... Mn représentant la clef secrète Ks . A chaque coup d'horloge, l'adresse du mot à lire dans la mémoire secrète est déterminée en partie par le mot lu au cycle précédent et en partie par le bit du code d'entrée CE, qui est appliqué sur un fil de l'entrée d'adresse ADR. Le code d'authentification CA est prélevé à la sortie de la mémoire 7.

Dans FR 89 09734 (FR 2 650 097 ou EP 409 701), l'adresse de lecture d'un mot dans la mémoire dépend en outre de la valeur de bits appartenant à des mots lus dans la mémoire au cours de cycles précédents, ce résultat étant obtenu grâce à un décalage et une combinaison en cascade de bits, au moyen de registres et de portes OU EXCLUSIF.

L'inconvénient des machines logiques classiques est de présenter un nombre d'états interne trop faible. Pour pallier ces inconvénients, on a proposé dans le brevet FR 92 13913 (N° publication FR 2 698 195) de procéder à plusieurs passages successifs du code d'entrée CE dans la machine logique avant de délivrer le code d'authentification CA. Cette solution présente toutefois l'inconvénient de nécessiter plusieurs coups d'horloge pour l'obtention d'un seul bit du code d'authentification CA, ce qui ralentit considérablement le fonctionnement du circuit d'authentification et la durée de la procédure d'authentification.

Ainsi, un objectif de la présente invention est de prévoir un circuit d'authentification performant présentant les caractéristiques et avantages énumérés plus haut.

Un autre objectif de l'invention est de prévoir une machine logique et un circuit d'authentification à mémoire secrète qui présente un grand nombre d'états internes pour un nombre limité de mots dans la mémoire secrète.

Un objectif plus particulier de l'invention est de prévoir une machine logique et circuit d'authentification pouvant présenter environ 65000 transitions d'états internes afin de pouvoir produire des codes d'authentification d'au moins 16 bits.

Encore un autre objectif de l'invention est de prévoir une machine logique et un circuit d'authentification qui soient simples à fabriquer et d'un coût de revient réduit.

Ces objectifs sont atteints grâce à un procédé pour produire un code d'authentification conforme à la revendication 1.

La présente invention concerne également une machine logique conforme à la revendication 8.

La présente invention concerne également un circuit d'authentification à entrée et sortie série, pour produire un code d'authentification à partir d'un code d'entrée, comprenant une machine logique selon l'invention, des moyens logiques pour injecter bit à bit le code d'entrée dans la machine logique, au rythme du signal d'horloge, et des moyens pour extraire, au rythme du signal d'horloge, un bit de la machine logique en tant que bit du code d'authentification.

Ces objets, caractéristiques et avantages ainsi que d'autres de la présente invention seront exposés plus en détail dans la description suivante d'un procédé, d'une machine logique et d'un circuit d'authentification selon l'invention, en relation avec les figures jointes parmi lesquelles :

la figure 1 précédemment décrite est le schéma électrique d'un microcircuit de carte à mémoire classique,

la figure 2 précédemment décrite représente un circuit d'authentification mis en oeuvre dans une carte à mémoire classique,

la figure 3 précédemment décrite est le schéma de principe d'une machine logique de l'art antérieur,

la figure 4 représente sous forme de blocs une machine logique,

la figure 5 représente une variante de réalisation de la machine logique de la figure 4,

la figure 6 représente une machine logique selon l'invention, et

la figure 7 représente de façon plus détaillée un circuit d'authentification utilisant la machine logique de la figure 6.

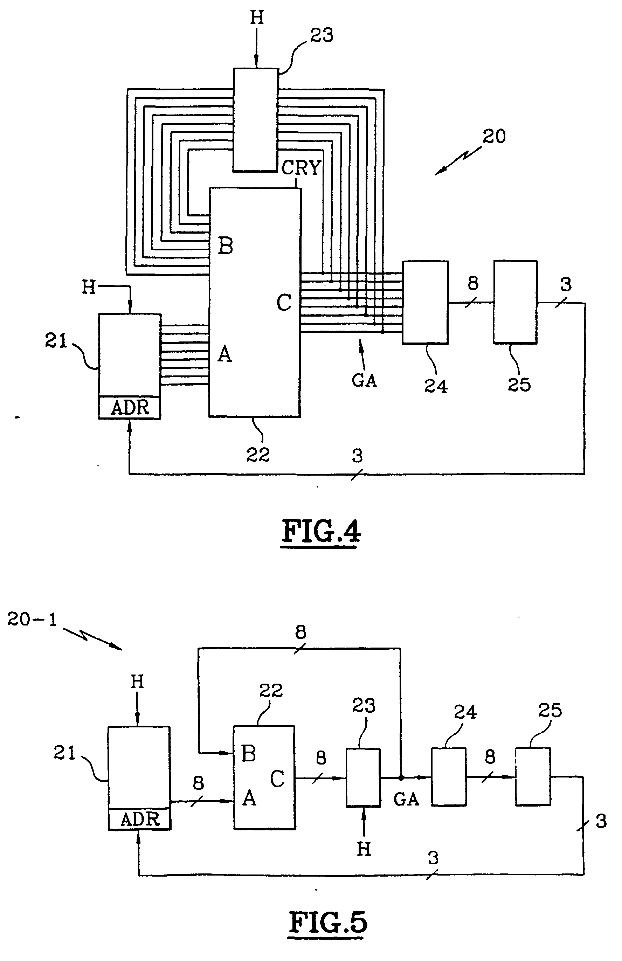

La figure 4 représente une machine logique 20 comprenant une mémoire 21 secrète (c'est-à-dire non accessible de l'extérieur) pilotée par un signal d'horloge H, un circuit logique 22 à deux entrées A, B et une sortie C de type parallèle. La machine logique 20 comprend également un registre tampon 23 commandé par le signal d'horloge H, un circuit logique mélangeur 24 et un circuit logique réducteur 25. La mémoire 21 contient une pluralité de mots binaires formant la clef secrète Ks de la machine logique 20, et sa sortie est appliquée sur l'entrée A du circuit 22. La sortie C du circuit 22 est appliquée sur l'entrée du circuit mélangeur 24 et est par ailleurs ramenée sur l'entrée B par l'intermédiaire du registre tampon 23. La sortie du circuit mélangeur 24 est appliquée sur l'entrée du circuit réducteur 25 dont la sortie attaque l'entrée d'adresse ADR de la mémoire 21. Le circuit mélangeur 24 est optionnel et a pour fonction de combiner de façon logique les bits de la sortie C du circuit 22 pour créer un effet de "brouillage" et rendre le fonctionnement de la machine logique 20 aussi complexe et indéchiffrable que possible. Le circuit 25 a pour fonction de réduire, lorsque cela est nécessaire, le nombre de bits délivrés par le circuit 24, afin d'obtenir le nombre de bits nécessaires au pilotage de l'entrée d'adresse ADR de la mémoire 21. Le circuit 22 réalise une fonction de combinaison Fc de ses deux entrées A et B et délivre sur la sortie C un mot binaire GA pouvant s'écrire :

$$GA = A \; Fc \; B$$

Par la suite, le mot GA sera appelé "mot générateur d'adresse" car, comme cela apparaît clairement sur la figure 4, la valeur d'adresse appliquée sur l'entrée ADR de la mémoire 21 est générée à partir du mot GA.

La fonction de combinaison Fc est une fonction à sens unique, ce qui signifie que le mot binaire GA ne peut pas révéler les valeurs des entrées A et B (la fonction OU EXCLUSIF calculée bit à bit est par exemple une fonction à sens unique).

Lorsque l'on applique à la mémoire 21 et au registre tampon 23 un coup d'horloge H, un mot lu dans la mémoire 21 est appliqué à l'entrée A du circuit 22. Parallèlement, le mot présent sur la sortie C du circuit 22 est recopié par la sortie du registre tampon 23 et appliqué à l'entrée B du circuit 22 (l'homme de l'art notera qu'en pratique, pour des raisons de synchronisation, un court décalage temporel peut être prévu entre l'application du coup d'horloge H sur la mémoire 21 et son application sur le registre tampon 23).

Ainsi, si l'on applique un nombre n de coups d'horloge H après une remise à zéro de la machine logique 20, on trouve à la sortie du circuit 22, au coup d'horloge $H_n$ de rang n, un mot binaire GA générateur de l'adresse du mot à lire au coup d'horloge suivant $H_{n+1}$ qui est le résultat de la combinaison des mots $M_1$, $M_2$, $M_3$, $M_4$....$M_n$ lus dans la mémoire 21 depuis le premier coup d'horloge. Le mot GA peut s'écrire ainsi :

$$GA = M_1 \; Fc \; M_2 \; Fc \; M_3 \; FC \; M_4 \; Fc \; M_5 \; .............. \; Fc \; M_n$$

Ainsi, un grand nombre de mots générateurs d'adresse GA différents peuvent être produits à partir d'un nombre limité de mots stockés dans la mémoire 21, ce qui garantit de nombreuses possibilités en termes de transitions d'états.

Dans un mode de réalisation préféré en raison de sa simplicité, le circuit 22 est un additionneur huit bits dont la sortie CRY "report de somme" est laissée en l'air, et la mémoire 21 contient huit mots binaires de huit bits chacun. Le mot GA sur la sortie C de l'additionneur 22 est alors un mot de huit bits g0 à g7 qui constitue le résultat de l'addition modulaire modulo 255 des mots $M_1$, $M_2$, $M_3$, ...$M_n$ lus dans la mémoire 21 :

$$GA = \sum M_1 \text{ à } M_n \text{ (modulo 255)}$$

Dans ce cas, on obtient 256 mots générateurs d'adresse différents, soit 256 états internes et 256 possibilités de transition d'états, à partir d'une clef secrète Ks contenant seulement 8 mots de 8 bits.

Une variante 20-1 de réalisation de la machine logique 20 est représentée en figure 5. Selon cette variante, l'entrée du circuit mélangeur 24 est attaquée par la sortie du registre tampon 23 qui est toujours appliquée sur l'entrée B du circuit 22. Dans ce cas, le mot générateur d'adresse GA est le résultat de l'addition modulaire modulo 255 des mots $M_1$, $M_2$, $M_3$, ...$M_{n-1}$ lus au cours des cycles d'horloge précédents :

$$GA = \sum M_1 \text{ à } M_{n-1} \text{ (module 255)}$$

On rappelle maintenant que l'objectif de l'invention est d'obtenir un grand nombre d'états internes pour un nombre limité de mots dans la mémoire secrète. Un objectif particulier de la présente invention est d'obtenir une machine logique présentant environ 65000 transitions possibles entre ses états internes, afin de pouvoir exploiter la pleine échelle d'un code de 16 bits que l'on souhaite produire. Ce résultat peut être atteint simplement en remplaçant l'additionneur 22 de huit bits par un additionneur de seize bits (soit 65536 valeurs possibles pour le mot générateur d'adresse GA) tout en conservant la mémoire secrète de huit mots de huit bits. Toutefois, cette solution n'est pas avantageuse industriellement en raison du surcoût de fabrication qu'elle entraînerait. On cherche donc à se limiter à une structure de 8 bits.

Selon l'invention, on multiplie les possibilités de la machine logique en faisant intervenir un registre à décalage fonctionnant en mode pseudo-aléatoire, par exemple un registre de 8 bits, et en injectant au moins un bit du registre pseudo-aléatoire dans le mot générateur d'adresse GA. Dans ce cas, le nombre d'états internes de la machine logique est porté à 256 x 256 soit environ 65000 possibilités, chaque état interne du registre pseudo-aléatoire pouvant se combiner avec chaque état interne du mot générateur d'adresse GA.

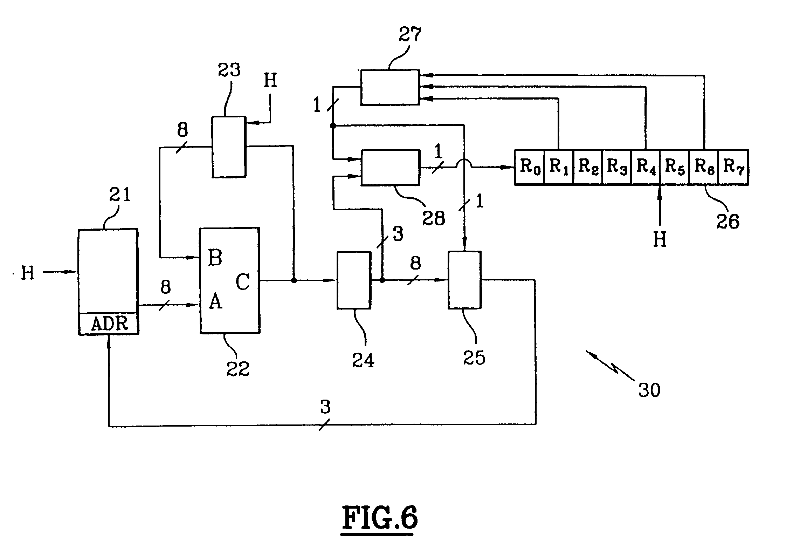

La figure 6 représente une machine logique 30 conforme à l'invention. On y retrouve la mémoire 21 ainsi que les circuits 22, 23, 24, 25, disposés de la manière décrite en relation avec la figure 4. La machine logique 30 comprend en outre un registre à décalage 26 de huit bits r0, r1,...r7, cadencé par l'horloge H et agencé en mode fonctionnement pseudo-aléatoire.

Le mode de fonctionnement pseudo-aléatoire du registre 26 est assuré quand au moins un bit interne r0-r7 du registre 26 et au moins un bit du mot générateur d'adresse GA sont combinés ensemble de façon logique pour former le bit d'entrée du registre 26 au coup d'horloge suivant. Ainsi, dans l'exemple illustré par la figure 6, on combiné trois bits r1, r4 et r6 du registre 26 dans un circuit logique 27 (on aurait pu en combiner plus, ou moins). La sortie du circuit 27 délivre un bit que l'on combine avec trois bits du mot générateur d'adresse GA au moyen d'un circuit logique 28 (ici également, on aurait pu en combiner plus, ou moins). La sortie du circuit 28 délivre un bit appliqué à l'entrée du registre 26.

D'autre part, pour que les 256 états internes possibles du registre pseudo-aléatoire 26 se combinent avec les 256 états possibles du mot générateur d'adresse GA, et confèrent à la machine logique 30 environ 65000 possibilités en termes de transitions d'états, au moins un bit du registre pseudo-aléatoire 26 doit être combiné avec au moins un bit du mot générateur d'adresse GA. Dans l'exemple de la figure 6, on a choisi d'envoyer dans le circuit réducteur 25 le bit délivré par le circuit 27 , ce bit étant représentatif des trois bits r1 r4, r6 du registre 26.

De préférence, le circuit réducteur 25, le circuit 27 et le circuit 28 sont des circuits logiques linéaires, c'est-à-dire comprenant des fonctions logiques à base de portes OU EXCLUSIF.

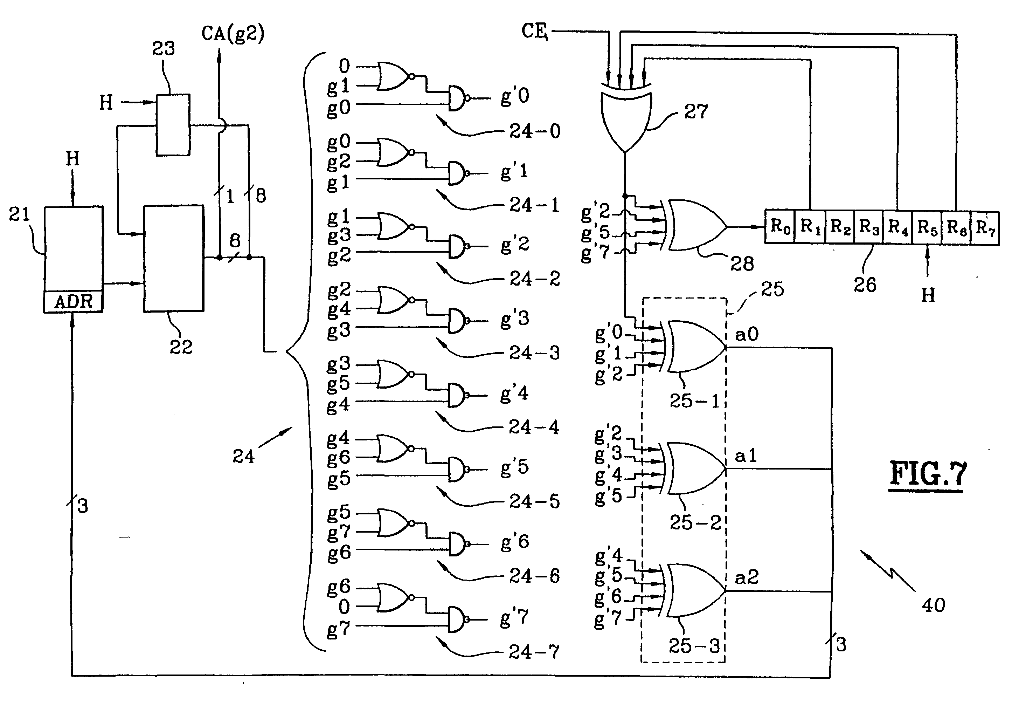

La figure 7 illustre un exemple de réalisation d'un circuit d'authentification 40 à partir de la machine logique 30 qui vient d'être décrite. Le circuit 40 délivre un code d'authentification CA de type série à partir d'un code d'entrée CE également de type série. On y retrouve les éléments constitutifs de la machine logique 30, c'est-à-dire la mémoire secrète 21 contenant la clef secrète formée par les 8 mots de 8 bits, l'additionneur 22, le registre tampon 23, les circuits 24, 25, 27, 28 et le registre 26.

Le circuit mélangeur 24 comprend huit sous-ensembles logiques 24-0, 24-1, 24-2...24-7 délivrant des bits g'0, g'1, g'2...g'7 résultant du mélange logique des bits g0, g1, g2, g3,...g7 du mot générateur d'adresse GA. Chaque sous-ensemble 24-0 à 24-7 comprend par exemple une porte NON OU à deux entrées dont la sortie est appliquée sur une entrée d'une porte NON ET à deux entrées. Chaque bit $g'_i$ de rang i délivré par un sous-ensemble 20-i est par exemple de la forme logique suivante (le symbole "/" représentant le NON logique) :

$$g'_i = /(g_i \text{ ET } /(g'_{i+1} \text{ OU } g_{i-1})),$$

à l'exception du bit de plus faible poids g'0 qui est de la forme :

$$g'0 = /(g0 \text{ ET } /g1)$$

et du bit de plus fort poids g'7 qui est de la forme :

$$g'7 = /(g7 \text{ ET } /g6)$$

Ici, on a choisi d'introduire le code d'entrée CE au niveau du circuit 27. Ainsi, le circuit 27 est par exemple une porte OU EXCLUSIF à quatre entrées recevant le bit du code d'entrée CE et les trois bits r1, r4, r6 du registre pseudo-aléatoire.

Le circuit 28 dont la sortie attaque l'entrée du registre pseudo-aléatoire 26 est par exemple une porte OU EXCLUSIF à quatre entrées recevant par exemple les bits g'2 g'5 g'7 du mot générateur d'adresse GA transformé par le circuit mélangeur 24, et le bit délivré par la porte OU EXCLUSIF 27.

Le circuit réducteur 25 comprend par exemple trois portes OU EXCLUSIF 25-1, 25-2, 25-3 à quatre entrées, délivrant respectivement des bits a0, a1, a2 appliqués sur l'entrée d'adresse ADR de la mémoire secrète 21. La porte 25-1 reçoit par exemple sur son entrée la sortie de la porte 27 et les bits g'0, g'1, g'2, la porte 25-2 les bits g'2, g'3, g'4, g'5 et enfin la porte 25-3 reçoit les bits g'4, g'5, g'6, g'7.

Enfin, le bit du code d'authentification CA peut être prélevé en amont du point où est injecté le code d'entrée CE selon le sens de circulation des états logiques des bits, par exemple à la sortie de l'additionneur 22. On peut par exemple prélever le bit g2 du mot générateur d'adresse GA comme bit du code d'authentification CA.

Grâce à la présente invention, on dispose d'un circuit d'authentification 40 simple à réaliser tout en étant apte à délivrer, en 16 coups d'horloge seulement, un code d'authentification CA de 16 bits, et cela en exploitant les 65000 possibilités offertes par le code. Comme dans l'art antérieur, le code CA peut s'écrire

$$CA = F_{Ks} ( CE )$$

$F_{Ks}$ étant la fonction de transformation réalisée par le circuit 40 à partir de la clef secrète Ks qui est seulement constituée de 8 mots de 8 bits.

A la lecture de la description qui précède, il apparaîtra clairement à l'homme de l'art que le circuit d'authentification selon l'invention est susceptible de nombreuses variantes et modes de réalisation, notamment en ce qui concerne les diverses combinaisons de bits permettant de brouiller le fonctionnement du circuit ou de multiplier le nombre de ses états internes. Comme toutefois les performances d'un tel circuit reposent sur des paramètres aléatoires et statistiques, l'homme de l'art s'assurera, notamment au moyen d'outils de simulation informatique classique, que le mode de réalisation particulier envisagé conduit bien aux performances recherchées.

Par ailleurs, les performances offertes par le circuit d'authentification selon l'invention permettent de l'utiliser de deux manières. La première manière consiste à injecter le code d'entrée CE et sortir le code d'authentification CA simultanément, en synchronisation avec l'horloge. La deuxième manière consiste à injecter d'abord le code d'entrée CE, puis à sortir le code d'authentification CA lorsque tout le code CE a été absorbé. Par cette deuxième méthode, même si deux codes d'entrée CE sont très ressemblants et ne diffèrent par exemple que d'un seul bit, les codes d'authentification produits seront très différents, ce qui augmente le degré d'inviolabilité du circuit d'authentification.

Enfin, si l'on souhaite produire un code d'authentification CA de 32 bits à partir d'un code d'entrée CE de 32 bits alors que le circuit d'authentification ne présente qu'environ 65000 possibilités de transitions d'états internes (couvertes par un code de 16 bits), la présente invention propose une méthode consistant à :

- découper le code d'entrée CE en deux codes CE1, CE2 de 16 bits chacun,
- injecter d'abord le code CE1 (16 coups d'horloge),
- produire un premier code d'authentification CA1 de 16 bits (16 autres coups d'horloge), puis
- injecter le code CE2 (16 coups d'horloge), et
- produire ensuite un deuxième code d'authentification CA2 de 16 bits (16 autres coups d'horloge),

le code d'authentification final étant obtenu par chaînage des codes CA1 et CA2.

Bien que l'on ait indiqué dans le préambule que la présente invention vise à perfectionner les cartes à mémoire, il est bien évident que le procédé et le circuit d'authentification selon la présente invention sont susceptibles de nombreuses applications, et concernent de façon générale tous les produits utilisant un microcircuit à logique câblée dont l'authenticité doit être vérifiée, comme les étiquettes électroniques sans contact (fonctionnant au moyen de signaux électromagnétiques), les clés électroniques (avec ou sans contact), les cartes électroniques pour d'identification des personnes, etc.

**Revendications**

1. Procédé pour produire un code d'authentification (CA), comprenant des cycles de lecture de mots binaires ($M_n$) dans une mémoire secrète (21) comportant une pluralité de mots binaires, dans lequel à chaque cycle l'adresse de lecture d'un mot dans la mémoire secrète (21) est générée à partir d'un mot binaire (GA) générateur d'adresse formant le résultat d'une opération de combinaison (Fc, $\sum$) de mots ($M_1$ à $M_n$) lus dans la mémoire au cours de cycles précédents, **caractérisé en ce qu'**il comprend une opération de transformation du mot (GA) générateur d'adresse consistant à combiner de façon logique au moins un bit (g'0,g'1,g'2) du mot (GA) générateur d'adresse avec au moins un bit (r1,r4,r6) d'un registre à décalage pseudo-aléatoire (26).

2.  Procédé selon la revendication 1, dans lequel ladite opération de combinaison de mots lus dans la mémoire est l'opération d'addition.

3.  Procédé selon l'une des revendications 1 à 2, comprenant une opération de transformation (g'0-g'7) dudit mot (GA) générateur d'adresse consistant à combiner entre eux, de façon logique, au moins une partie des bits (g0-g7) du mot générateur d'adresse.

4.  Procédé selon l'une des revendications 1 à 3, pour produire un code d'authentification (CA) à partir d'un code d'entrée (CE), dans lequel :

    -   au cours d'une phase d'initialisation du procédé, au moins un bit (g'0,g'1,g'2) du mot (GA) générateur d'adresse est combiné de façon logique, à chaque cycle de lecture de la mémoire, avec un bit du code d'entrée (CE),
    -   au cours d'une phase de production du code d'authentification (CA), un bit (g2) du mot (GA) générateur d'adresse est prélevé, à chaque cycle de lecture de la mémoire, pour former un bit du code d'authentification (CA).

5.  Procédé selon la revendication 4, dans lequel lesdites phases d'initialisation et de production du code d'authentification (CA) sont réalisées simultanément, le code d'authentification (CA) étant produit pendant que ledit code d'entrée (CE) est absorbé.

6.  Procédé selon la revendication 4, dans lequel lesdites phases d'initialisation et de production du code d'authentification (CA) sont réalisées séquentiellement, la phase de production du code d'authentification commençant lorsque tous les bits du code d'entrée (CE) ont été absorbés au cours de la phase d'initialisation.

7.  Procédé selon la revendication 6, pour produire un code d'authentification (CA) de grande longueur, dans lequel on divise au moins en deux parties (CE1, CE2) le code d'entrée (CE), on absorbe une première partie (CE1) du code d'entrée, puis on produit une première partie (CA1) du code d'authentification (CA), on absorbe la deuxième partie (CE2) du code d'entrée, puis on produit la deuxième partie (CA2) du code d'authentification (CA).

8.  Machine logique (20, 20-1, 30) cadencée par un signal d'horloge (H), comprenant une mémoire secrète (21) dans laquelle est stockée une pluralité de mots binaires lus au rythme de l'horloge, dans laquelle la sortie de la mémoire (21) est appliquée sur une première entrée (A) d'un circuit logique (22) dont la sortie (C) est ramenée sur la deuxième entrée (B), le circuit logique (22) réalisant une combinaison (Fc, "+") de ses deux entrées (A, B) et délivrant un mot binaire (GA) générateur d'adresse envoyé sur l'entrée d'adresse (ADR) de la mémoire, **caractérisée en ce qu'**elle comprend un registre à décalage pseudo-aléatoire (26) et des moyens logiques (25-1, 27) pour combiner au moins un bit (r1, r4, r6) du registre à décalage (26) avec au moins un bit (g'0,g'1,g'2) du mot (GA) générateur d'adresse.

9.  Machine selon la revendications 8, dans laquelle ledit circuit logique (22) est un additionneur.

10. Machine selon l'une des revendications 8 et 9, comprenant des moyens logiques (24) pour combiner entre eux des bits (g0-g7) du mot générateur d'adresse (GA).

11. Circuit d'authentification (40) à entrée et sortie série, pour produire un code d'authentification (CA) à partir d'un code d'entrée (CE), **caractérisé en ce qu'**il comprend :

    -   une machine logique (30) selon l'une des revendications 8 à 10,
    -   des moyens logiques (25-1, 27) pour injecter bit à bit le code d'entrée (CE) dans la machine logique (30), au rythme du signal d'horloge, et
    -   des moyens pour extraire, au rythme du signal d'horloge, un bit (g2) de la machine logique (30) en tant que bit dudit code d'authentification (CE).

**Claims**

1.  Method of producing an authenticating code (CA), comprising cycles for reading binary words ($M_n$) in a secret memory (21) comprising a plurality of binary words, in which, at each cycle, the address for reading a word in the secret memory (21) is generated from an address generating binary word (GA) forming the result of an operation (Fc, $\sum$) combining words ($M_1$ to $M_n$) read in the memory during previous cycles, **characterised in that** it comprises an operation for transforming the address generating word (GA) consisting of combining, in a logical way, at least one bit (g'0, g'1, g'2) of the address generating word (GA) with at least one bit (r1, r4, r6) of a pseudo random shift register (26).

2.  Method according to claim 1, in which the said operation for combining words read in the memory is the adding operation.

3.  Method according to one of claims 1 to 2, comprising an operation (g'0-g'7) to transform the said address generating word (GA) consisting of combining, between them, in a logical way, at least part of the bits (g0-g7) of the address generating word.

4. Method according to one of claims 1 to 3, for producing an authenticating code (CA) from an input code (CE), in which :

   - during an initialisation phase of the method, at least one bit (g'0, g'1, g'2) from the address generating word (GA) is combined, in a logical way, at each read cycle of the memory, with a bit from the input code (CE),
   - during a production phase of the authenticating code (CA), a bit (g2) is removed from the address generating word (GA), at each read cycle of the memory, to form a bit of the authenticating code.

5. Method according to claim 4, in which the said initialisation and production phases of the authenticating code are carried out simultaneously, the authenticating code being produced while the said input code (CE) is absorbed.

6. Method according to claim 4, in which the said initialisation and production phases of the authenticating code (CA) are carried out sequentially, the production phase of the authenticating code beginning when all the bits of the input code (CE) have been absorbed during the initialisation phase.

7. Method according to claim 6, for producing a lengthy authenticating code (CA), in which the input code (CE) is divided into two parts (CE1, CE2), a first part (CE1) of the input code is absorbed, then a first part (CA1) of the authenticating code (CA) is produced, the second part (CE2) of the input code is absorbed, then the second part (CA2) of the authenticating code (CA) is produced.

8. Logical machine (20, 20-1, 30) clocked by a signal clock (H), comprising a secret memory (21) in which is stored a plurality of binary words read at the rhythm of the clock, in which the output of the memory (21) is applied to a first input (A) of a logical circuit (22) the output (C) of which is returned to the second input (B), the logical circuit (22) combining (Fc, "+") both its inputs (A, B) and delivering an address generating binary word (GA) sent to the address input (ADR) of the memory, **characterised in that** it comprises a pseudo random shift register (26) and logical means (25-1, 27) for combining at least one bit (r1, r4, r6) of the shift register (26) with at least one bit (g'0, g'1, g'2) of the address generating word (GA).

9. Machine according to claim 8, in which the said logical circuit (22) is an adder.

10. Machine according to one of claims 8 and 9, comprising logical means (24) for combining between them bits (g0-g7) of the address generating word (GA).

11. Authenticating circuit (40), with series input and output, for producing an authenticating code (CA) from an input code (CE), **characterised in that** it comprises :

   - a logical machine (30) according to one of claims 8 to 10,
   - logical means (25-1, 27) for injecting the input code (CE) bit by bit into the logical machine (30), at the rhythm of the clock signal, and
   - means for extracting, at the rhythm of the clock signal, a bit (g2) from the logical machine (30) as a bit of the said authenticating code (CE).

## Patentansprüche

1. Verfahren zur Erzeugung eines Authentifizierungskodes (CA), umfassend Lesezyklen von Binärworten ($M_n$) in einem geheimen Speicher (21), der eine Vielzahl von Binärworten umfasst, wobei bei jedem Zyklus die Leseadresse eines Worts in dem geheimen Speicher (21) erzeugt wird ausgehend von einem Adresserzeugungs-Binärwort (GA), welches das Resultat eines Kombiniervorgangs (Fc, $\sum$) von Worten ($M_1$-$M_n$) ist, die im Verlauf von vorangehenden Zyklen im Speicher gelesen wurden, **dadurch gekennzeichnet, dass** es einen Transformationsvorgang des Adresserzeugungs-Worts (GA) umfasst, der darin besteht logisch mindestens ein Bit (g'0, g'1, g'2) des Adresserzeugungs-Worts (GA) mit mindestens einem Bit (r1, r4, r6) eines Pseudozufalls-Schieberegisters (26) zu kombinieren.

2. Verfahren nach Anspruch 1, bei dem der Kombiniervorgang der in dem Speicher gelesenen Worte der Addiervorgang ist.

3. Verfahren nach einem der Ansprüche 1 oder 2, umfassend einen Transformationsvorgang (g'0-g'7) des Adresserzeugungs-Worts (GA), der darin besteht unter ihnen logisch mindestens einen Teil der Bits (g0-g7) des Adresserzeugungs-Worts zu kombinieren.

4. Verfahren nach einem der Ansprüche 1 bis 3, zur Erzeugung eines Authentifizierungskodes (CA) ausgehend von einem Eingabekode (CE), wobei:

   - im Verlauf einer Initialisierungsphase des Verfahrens mindestens ein Bit (g'0, g'1, g'2) des Adresserzeugungs-Worts (GA) bei jedem Lesezyklus des Speichers logisch mit einem Bit des Eingabekodes (CE) kombiniert wird,

- im Verlauf einer Erzeugungsphase des Authentifizierungskodes (CA) ein Bit (g2) des Adresserzeugungsworts (GA) bei jedem Lesezyklus des Speichers geholt wird, um einen Authentifizierungskode (CA) zu bilden.

5. Verfahren nach Anspruch 4, wobei die Phasen zur Initialisierung und zur Erzeugung des Authentifizierungskodes (CA) gleichzeitig verwirklicht sind, und der Authentifizierungskode (CA) während der Aufnahme des Eingabekodes (CE) erzeugt wird.

6. Verfahren nach Anspruch 4, wobei die Phasen zur Initialisierung und zur Erzeugung des Authentifizierungskodes (CA) sequentiell verwirklich sind, und die Phase zur Erzeugung des Authentifizierungskodes beginnt wenn alle Bits des Eingabekodes (CE) im Verlauf der Initialisierungsphase aufgenommen wurden.

7. Verfahren nach Anspruch 6, zur Erzeugung eines Authentifizierungskodes (CA) großer Länge, wobei der Eingabekode (CE) in mindestens zwei Teile (CE1, CE2) aufgeteilt wird, ein erster Teil (CE1) des Eingabekodes aufgenommen wird, danach ein erster Teil (CA1) des Authentifizierungskodes (CA) erzeugt wird, der zweite Teil (CE2) des Eingabekodes aufgenommen wird, und dann der zweite Teil (CA2) des Authentifizierungskodes (CA) erzeugt wird.

8. Logikmaschine (20, 20-1, 30), die durch ein Taktsignal (H) getaktet wird, umfassend einen geheimen Speicher (21), in welchem eine Vielzahl von Binärworten gespeichert ist, die im Takt gelesen werden, wobei der Ausgang des Speichers (21) an einen ersten Eingang (A) einer Logikschaltung (22) angelegt ist, deren Ausgang (C) zum zweiten Eingang (B) zurückgeführt ist, wobei die Logikschaltung (22) eine Kombination (Fc "+") dieser zwei Eingänge (A, B) verwirklicht und ein Adresserzeugungs-Binärwort (GA) liefert, das an den Adresseingang (ADR) des Speichers geliefert wird, **dadurch gekennzeichnet, dass** sie ein Pseudozufalls-Schieberegister (26) und Logikmittel (25-1, 27) zum Kombinieren mindestens eines Bits (r1, r4, r6) des Schieberegisters (26) mit mindestens einem Bit (g'0, g'1, g'2) des Adresserzeugungs-Worts (GA) umfasst.

9. Maschine nach Anspruch 8, bei welcher die Logikschaltung (22) ein Addierer ist.

10. Maschine nach einem der Ansprüche 8 oder 9, umfassend Logikmittel, um unter sich Bits (g0-g7) des Adresserzeugungs-Worts (GA) zu kombinieren.

11. Authentifizierungsschaltung (40) mit seriellem Eingang und Ausgang, zur Erzeugung eines Authentifizierungskodes (CA) ausgehend von einem Eingabekode (CE), **dadurch gekennzeichnet, dass** sie umfasst:

- eine Logikmaschine (30) nach einem der Ansprüche 8 bis 10,

- Logikmittel (25-1, 27) um den Eingabekode (CE) im Takt des Taktsignals Bit für Bit in die Logikmaschine (30) einzuführen, und

- Mittel um im Takt des Taktsignals ein Bit (g2) der Logikmaschine (30) als Bit des Authentifizierungskodes (CE) zu extrahieren.

## FIG.1

## FIG.2

## FIG.3

10

**FIG.4**

**FIG.5**

**FIG.6**

FIG.7

EP 0 890 157 B1